# EUROPEAN PATENT SPECIFICATION

(11) **EP 2 832 520 B1**
(45) Date of publication and mention of the grant of the patent: **06.04.2016**
(21) Application number: 13178621.2
(22) Date of filing: 30.07.2013
(51) Int. Cl.: B29C 41/46, B29C 41/06, B29C 33/06, B29C 35/16, B29C 35/08, B29C 41/04, H05B 6/10, H05B 6/14

(54) **Machine and method for rotational molding of hollow objects of thermoplastic material**
Maschine und Verfahren zum Drehformen von Hohlkörpern aus thermoplastischem Material
Machine et procédé de moulage rotatif d'objets creux en matière thermoplastique

(43) Date of publication of application: 04.02.2015
(73) Proprietor: Confindustria Bergamo, 24121 Bergamo (IT)
(72) Inventor: Bergamo, Lorenzo, 24027 Nembro (Bergamo) (IT); Daute, Sebastian, 58507 Lüdenscheid (DE); Fernandez, Nora, 28034 Madrid (ES); Kearns, Mark P., Belfast, BT7 1NN (GB); Vanzi, Marco, 24121 Bergamo (IT)
(74) Representative: Conti, Marco

(56) References cited:
- WO-A1-2013/021055
- DE-A1-102011 053 867
- FR-A1- 2 190 583
- GB-A- 712 939
- GB-A- 788 063
- GB-A- 1 294 068
- US-A- 3 734 665

## Description

This invention relates to a rotational moulding machine and to a method for moulding hollow objects of thermoplastic material.

The invention addresses the technical field of the rotational moulding of thermoplastic objects from basic thermoplastic material in the form of powder, granules or liquid. These objects are generally hollow (although the fact that the moulded objects are hollow shall not be construed as limiting the scope of the invention as described in this patent document).

As is known, the rotational moulding of hollow containers of thermoplastic material is done by heating a mixture in the form of powder, granules or liquid inside a mould.

The mould containing the powder mixture is heated and simultaneously moved (rotated) so as to melt the powder material and allow the melted material to adhere to the walls of the mould to form the hollow object required.

The mould is composed of a pair of half-shells which are coupled to define a cavity for receiving the basic material and having the shape of the object to be made.

In the technical sector concerned, moulding machines are known which have a fixed frame and a frame that is movable relative to the fixed frame which supports the mould itself. Examples of such machines are known, for example, from the following patent documents: EP1649997A1, EP2353829A1, US2010143519A1 and US2011017749A1.

In these machines the mould is usually heated by a diathermic oil circulating through it or, alternatively, by electrical current circulating through a conductor in contact with the mould (thanks to the Joule effect). One disadvantage of this technical solution based on diathermic oil or Joule effect, is due to the timescales of moulding, which are usually very long.

A further disadvantage lies in the energy consumption of the moulding machines, which is particularly high and is reflected in the production cost of the object made.

Yet another disadvantage is due to the need to cool the mould, which requires the provision of a dedicated cooling circuit.

Known from patent document US2008/0230957 is a stationary mould (that is, a mould suitable for traditional, non-rotational moulding) heated by electromagnetic induction. This solution, too, is disadvantageous in terms of heating efficiency (and cooling, which is a problem closely connected to that of heating). Other examples of stationary moulds are described in the following patent documents: WO2013/021055A1 and DE102011053867A1. Other examples of rotary moulds are described in the following patent documents: US3734665, GB1294068, FR2190583, GB712939 and GB788063. In particular, US3734665 discloses a rotational moulding machine according to the preamble of claim 1.

The aim of this invention is to provide a rotational moulding machine and a moulding method for making (hollow) objects from basic material in powder or liquid form and which can overcome the above mentioned disadvantages.

More specifically, the aim of this invention is to provide a thermoplastic rotational moulding machine and method which can reduce the timescale and energy consumption of moulding operations.

A further aim of this invention is to provide a rotational moulding machine and method which allow the material inside the mould to be heated in a particularly effective and efficient manner.

These aims are achieved by the machine and method according to the invention, as characterized in the appended claims.

More specifically, the rotational moulding machine according to the invention, for moulding hollow objects from basic material in the form of powder, granules or liquid, comprises:
- a mould having at least a first and a second half-shell of metallic material, coupled to define a cavity having the shape of the hollow object to be moulded, and at least one electrically conductive element disposed in contact with the first half-shell and/or the second half-shell to define a winding (or coil);
- a frame and at least one actuator for rotating the mould with respect to the frame;
- an electric power supply, electrically coupled to said at least one electrically conductive element to feed it with a voltage variable at high frequency, so as to generate a varying magnetic field which at least partly surrounds the half-shells and which heats the first half-shell and/or the second half-shell by electromagnetic induction.

Preferably, the electrically conductive element (that is, the coil) is housed in a groove (or channel), formed on the outside surface of the mould half-shells, at a predetermined depth. This further improves the efficiency of heat exchange to and from the mould during both heating and cooling. The method of rotational moulding (of hollow objects from basic thermoplastic material in the form of powder, granules or liquid), comprises the following steps:
- providing a mould having at least a first half-shell and a second half-shell coupled to define a cavity having the shape of the object to be moulded;
- providing at least one electrically conductive element in contact with at least one of the half-shells, defining a winding and arranged to generate a magnetic field at least partly surrounding the half-shells;
- introducing the basic thermoplastic moulding material, in powder or liquid form, in the cavity;
- electrically powering the winding with a varying electric signal so as to heat at least one of the half-shells by induction and transmit heat to the basic thermoplastic material inside the cavity;
- moving the mould during at least part of the step of electrically powering the winding with a varying electric signal.

It should be noted that the term "electric signal" is used to mean an electric power signal supplied to the mould winding in order to heat the mould. The winding, which is integral with the rotating mould, is preferably powered with high-frequency voltage through a resonant circuit. Preferably, this circuit comprises a capacitor pack which is integral with the rotating mould. This has the advantage of making the machine particularly simple in construction and of reducing energy consumption because it allows the amplitude of the supply current to be reduced.

The machine also comprises a control unit configured to perform feedback control of the pulses generated, in order to compensate for any phase displacement of the pulses during transfer from the generator to the winding which is integral with the mould.

Preferably, also, the conductor defining the winding which is integral with the mould is internally hollow so as to define a passage for a coolant fluid. This simplifies mould design and makes the machine particularly effective in cooling the mould.

It should be noted that according to another aspect of the invention, a simulator device is provided to optimize mould design for the purposes of mould heating.

The simulator device comprises a memory, a processor and an interface. The memory contains the data defining a thermal model of the mould (this data comprises a plurality of model parameters, representing, for example, the constructional features of the mould which are invariable relative to the shape of the part to be moulded, as well as, preferably, the characteristics of electrically powering the mould by electromagnetic induction).

The device is configured to receive input data relating to a plurality of input parameters representing the geometry of the mould as a function of the part to be moulded.

On receiving this data, the processor sets the values of a plurality of model parameters relating to the geometry of the mould. Of these, some are optimization parameters because they contribute to defining the model but, at the same time, are a direct object of optimization performed by the device. These optimization parameters regard in particular the geometry of the coil (the geometry is a function of mould shape but is subject to a margin of variability and design choice).

The memory contains software which, when run by the processor, starts a simulation or, preferably, two or more simulations of the thermal behaviour of (that is, of the temperature distribution in) the mould.

Preferably, the device is programmed to allow setting of a plurality of model parameters such as, for example, the frequency of the supply voltage or the temperature and flow rate of the coolant.

The distribution of the temperature in the mould is useful to assess the efficiency of rotational mould heating by electromagnetic induction.

Preferably, the device is programmed to run two or more simulations in succession. The device is programmed to modify one or more model parameters, between one simulation and the next, with particular regard to the aforesaid optimization parameters, based on a preset criterion aimed at optimizing the energy yield of the mould.

Thus, the device is preferably programmed to run an iterative process comprising a plurality of temperature distribution simulations, followed by corresponding modifications to the model parameter configuration (optimization).

At the end of the simulation process, the device preferably returns a suggested geometry of the coil, calculated as a function of the geometry of the specific mould (or of the plastic part to be moulded) in order to optimize mould heating and energy yield.

Preferably, the set of optimization parameters includes one or more of the following parameters:
- length of the winding (coil);
- depth of the channel formed on the mould half-shells and housing the coil;
- power of pulse generator;
- properties of coolant fluid;
- flow rate of coolant fluid.

This and other features of the invention will become more apparent from the following description of a preferred embodiment of it, illustrated purely by way of non-limiting example in the accompanying drawings, in which:

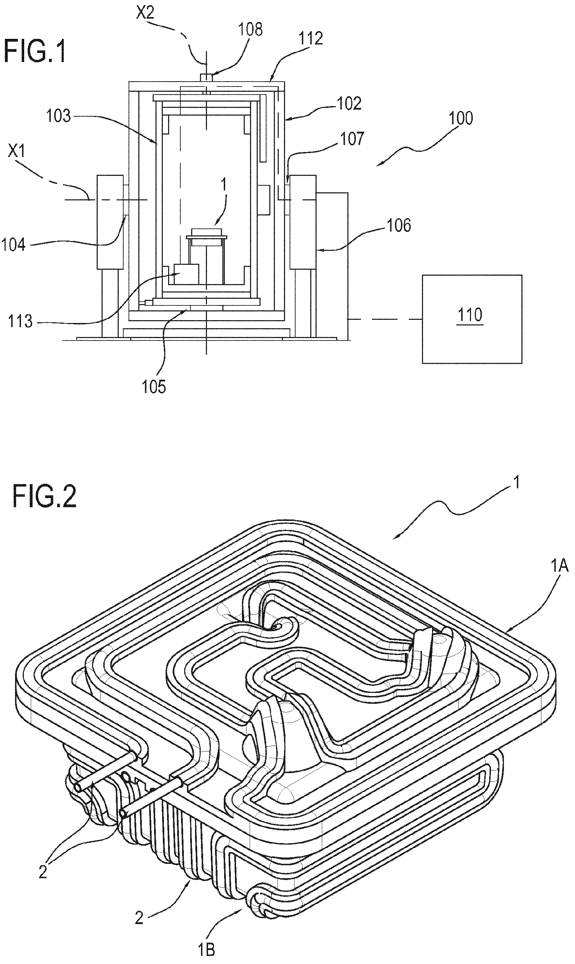

- Figure 1 is a schematic view of a preferred embodiment of the moulding machine of this invention;
- Figure 2 is a perspective view of a mould of this invention;
- Figure 3 is a sectional view of the mould of Figure 2;
- Figure 4 is a sectional view of a detail of the mould of Figure 2;
- Figure 5 is an exploded perspective view of the mould of the preceding figures.

In the accompanying drawings, the numeral 1 denotes a mould for thermoplastic materials according to this invention and the numeral 100 a moulding machine comprising the mould 1.

The mould 1 is a rotational mould.

The mould 1 is used to make hollow objects of thermoplastic material of any shape (for example, containers).

It should be noted that the mould 1 comprises at least two half-shells 1A and 1 B which are coupled to define a cavity 3 shaped to match the outer contours of the object to be made.

According to the invention, the mould 1 comprises at least one element 2 made of electrically conductive material (preferably metallic) defining an electric winding or coil.

It should be noted, therefore, that the element 2 of electrically conductive material is shaped to define a coil of any shape or size.

The element 2 of electrically conductive material (hereinafter also referred to as coil) is in contact, on the outside of it, with the half-shells (1A,1B) so that heat exchange is made possible, by conduction, between the half-shells (1A,1B) and the element 2.

Preferably, the electrically conductive element 2 is made of copper.

Preferably, the electrically conductive element 2 extends in coil-like fashion.

Preferably, the electrically conductive element 2 defines a winding.

The half-shells (1A,1B), on the other hand, are made preferably of aluminium.

Preferably, the half-shells (1A,1B) are made of metal.

According to another aspect, the electrically conductive element 2 is a tubular element which is internally hollow to allow a coolant fluid to flow inside it.

Preferably, the mould 1 comprises a plurality of electrically conductive elements 2 disposed on the outside surfaces (side, top and bottom) of the two half-shells (1A,1B).

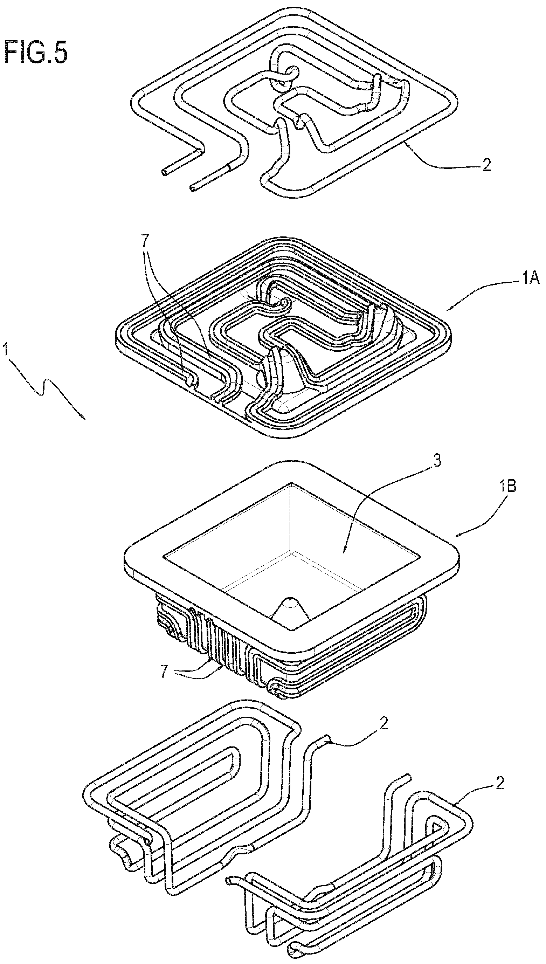

In the example illustrated, clearly visible in Figure 5, the mould 1 comprises three coils.

It should be noted, in particular, that each of the coils 2 extends on a portion of the outside surface of the half-shells (1A,1B) of the mould 1.

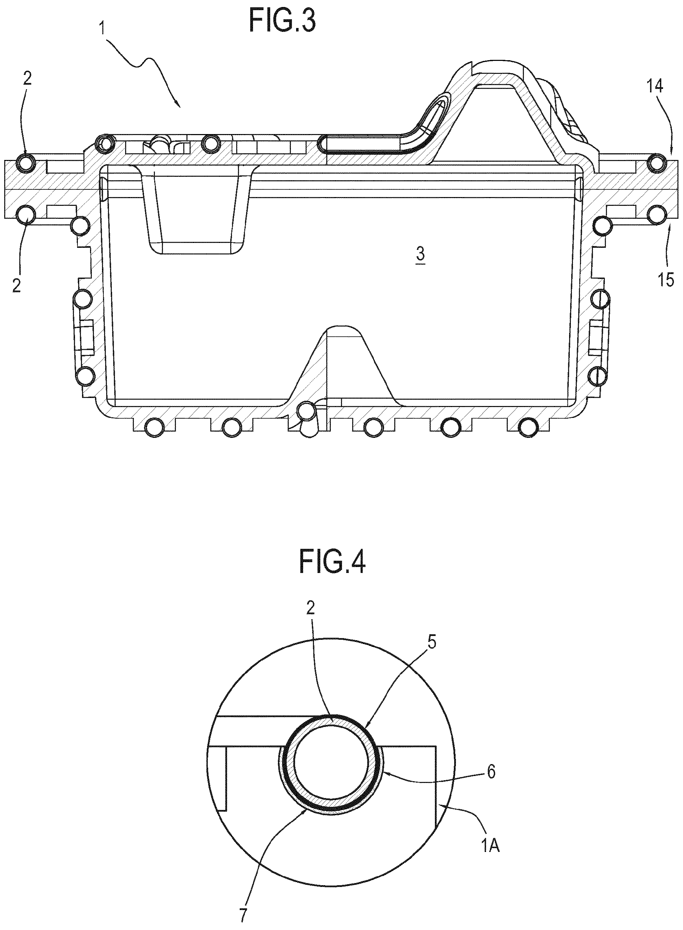

Figure 4 shows a coil in cross section.

As may be observed, the half-shells (1A, 1B) preferably comprise one or more seats 7 for receiving the coils.

Preferably, each seat 7 is defined by a channel formed on the outside surface of the two half-shells (1A,1B).

The seat 7 extends in such a way that it can house the respective electrically conductive element 2 inside it.

For example, if the electrically conductive element 2 extends in coil-like fashion, the seat 7 also extends in coil-like fashion.

The channels 7 are open towards the outside of the two half-shells (1A, 1B).

More specifically, the channels 7 are grooves formed on the outside surface of the two half-shells (1A,1B).

It should be noted that the coil 2 is preferably housed partly inside the seat 7.

In the embodiment illustrated, the electrically conductive element 2 preferably has a dielectric (electrically insulating) outside layer 5 whose dielectric rigidity in radial direction is greater than that of the electrically conductive element 2.

Preferably, the dielectric layer 5 has a dielectric rigidity greater than 200Kv/mm.

Thus, the dielectric rigidity of the dielectric layer 5 is high.

Preferably, also, the thermal conductivity of the layer 5 is greater than 0.1 W/(m K).

It should be noted that the dielectric layer 5 has a high resistance to high temperatures and, more specifically, is capable of resisting temperatures greater than 150° C.

It should be noted that the dielectric layer 5 has insulating properties in electrical terms and conductive properties in thermal terms: it thus provides good electrical insulation, resistance to high temperatures and good heat transmission.

Preferably, the dielectric layer 5 is a polyamide-based film (and still more preferably, the dielectric layer 5 is a layer of Kapton ®).

The mould 1 preferably also comprises a layer 6 of thermally conductive material interposed between the dielectric layer 5 and the walls of the seat 7.

The layer 6 has the function of filling the space between the coil (more specifically, in the example illustrated, between the dielectric layer 5) and the walls of the respective seat 7.

The layer 6 allows improving heat transmission by conduction between the element 2 and the half-shells (1A,1B).

At the same time, the layer 6 also increases the dielectric rigidity between the coil and the walls of the seat 7.

It should be noted that the layer 6 comprises a dielectric, thermally conductive material.

The layer 6 thus optimizes the thermal continuity between the dielectric layer 5 and the walls of the seat 7.

Preferably, the layer 6 comprises an inorganic polymer.

Still more preferably, the layer 6 comprises a silicone material.

Preferably, the layer 6 comprises a silicone paste.

Now described below is the moulding machine 100, which is equipped with the mould 1 described above.

From this description, the operation of the mould 1 may be inferred in more detail.

The machine 100 comprises a fixed frame 101.

The fixed frame 101 rests on the floor.

The machine 100 also comprises a first movable frame 102, which is movably mounted on (supported by) the fixed frame 101.

The first movable frame 102 rotates relative to the fixed frame 101.

More specifically, the first movable frame 102 is configured to rotate about a first axis X1 (preferably, substantially horizontal).

The machine 100 further comprises movement means 104 by which the first movable frame 102 is moved relative to the fixed frame 101. Preferably, the movement means 104 comprise an actuator.

The machine 100 further comprises a drive and control unit configured to control and drive the actuators of the machine itself.

The machine 100 also comprises a second movable frame 103, which is movably supported by the first movable frame 102.

It should be noted that, in practice, therefore, the second movable frame 103 is movable relative to the first movable frame 102 (and thus relative to the fixed frame 101).

More specifically, the second movable frame 103 rotates relative to the first movable frame 102 about a second axis X2 (preferably substantially vertical).

The second axis X2 is at right angles to the first axis X1.

The machine 100 further comprises movement means 105 by which the second movable frame 103 is moved relative to the first movable frame 102.

The mould is fixed to (that is, mounted on) the second movable frame 103. With reference to the first movable frame 102, it should be noted that the first movable frame 102 is connected to the fixed frame 101 by a first rotary joint 107.

With reference to the second movable frame 103, it should be noted that the second movable frame 103 is connected to the first movable frame 102 by a second rotary joint 108.

It should be noted that the first rotary joint 107 and the second rotary joint 108 are configured to allow cables to pass between the frames so that electrical signals can be carried (through the cables) from the fixed frame 101 to the second movable frame 103 (where the coil is located).

More specifically, the first rotary joint 107 and the second rotary joint 108 are equipped with rotary sliding contacts allowing signal transfer between input cables leading into the joint and output cables leading out of the joint. Preferably, the rotary joints for the passage of electrical current have gold-coated contact portions.

Preferably, the cables are intertwined (twisted pairs) so as to define a capacitance which can compensate the inductance produced between the ends of the cables.

It should be noted, therefore, that intertwining the cables allows the inductance of the cables, that is, of the power supply line, to be considerably reduced.

That means the twisted cables can also carry high-frequency power. According to the invention, the machine 100 also comprises a power supply.

Preferably, the power supply 106 comprises a signal generator 106.

Still more preferably, the power supply 106 comprises a pulse generator.

It should be noted that the generator 106 is a generator of signals at a predetermined frequency.

Preferably, the frequency is between 30 and 200 kHz.

Preferably, the generator signal is in the form of pulses.

The generator 106 is housed in a box-shaped container mounted to the fixed frame 101 of the machine.

It should also be noted that the machine 100 also comprises a capacitive module 113 electrically coupled in parallel to the coil.

The capacitive module 113 comprises one or more capacitors.

The generator 106 is coupled to the ends of the coil and of the capacitive module 113 to form, in their entirety, a resonant circuit.

It should be noted that the resonant circuit causes the coil to generate an electromagnetic field at a predetermined frequency.

The generator, the capacitive module 113 and the coil define in their entirety a radiofrequency transmitter circuit (which generates an electromagnetic field at the predetermined frequency at the coil).

The coil 2 thus defines a transmission antenna configured to transmit the radiofrequency signal received from the signal generator 106.

It should be noted that the capacitive module 113 and the coil are connected to the signal generator 106 by cables (which pass through the rotary joints 107 and 108).

It should be noted, more in general, that the machine 100 is equipped with a power supply line 112 having a first end and a second end defined by the aforementioned cables.

The signal generator 106 is connected to the first end and the electrically conductive element 2 is connected to the second end.

With reference to the specific location of the aforementioned elements, attention is drawn to the following.

The pulse generator 106 is mounted to the fixed frame 101 of the machine 100.

The capacitive module 113, on the other hand, is located on the second movable frame 103.

More specifically, the capacitive module 113 is mounted to the second rotary frame 103.

It should be noted that the coil is also mounted to the second movable frame 103.

The varying electromagnetic field generated by the coil induces eddy currents (by electromagnetic induction) in the half-shells (1A, 1B), thereby heating the mould.

Thus, the half-shells (1A,1B) are heated by electromagnetic induction. According to another aspect, a feedback signal is generated which is picked up at the coil.

This signal is preferably a low-power signal.

It should be noted that this feedback signal represents the instantaneous voltage at the coil and is sent to the signal generator 106.

The signal generator 106 is configured to receive the feedback signal and to regulate the signal it generates as a function of the feedback signal. More specifically, the signal generator 106 is configured to regulate the phase of the signal it generates as a function of the feedback signal. Advantageously, this aspect allows compensating possible phase displacements of the pulses between the power supply 106 and the electrically conductive element 2.

In other words, the pulse phase is controlled by a feedback system.

This advantageously allows maximizing the power transmitted by the generator 106 to the half-shells (1A, 1B) by induction since the pulses released by the coil are perfectly in phase.

The transmitter circuit is driven exactly at the frequency of resonance.

The fact of providing a low-power feedback signal picked up from the coil and sent to the pulse generator 106 and regulating the pulse generator 106 based on that signal advantageously makes it possible to compensate pulse delays due, for example, to the transmission line 112 (cables), and even to cancel them completely.

Indeed, it should be noted that the power supply line 112 (on account of the very inductance defined by it) causes a displacement of the signal generated by the signal generator 106 at the ends of the coil.

Below is a brief description of how the machine 100 works, from which the operation of the invention may be inferred.

The operator loads a predetermined quantity of basic thermoplastic material in the form of powder, granules or liquid into the two half-shells

(1A,1 B), and more specifically into the cavity 3.

Preferably, the basic thermoplastic material may be polyethylene (LLDPE, LDPE, LHDPE, HDPE), cross-linked polyethylene, polypropylene, E.V.A., nylon, polycarbonate, PVC, etc.

Next, the signal generator 106 generates a pulsed signal of predetermined frequency (preferably, a radio frequency signal).

It should be noted this signal is transmitted to the coil 2, which generates a varying electromagnetic field.

This varying electromagnetic field generates, by induction, eddy currents in the half-shells (1A, 1B) of the mould 1, thereby heating the basic thermoplastic material inside the cavity 3.

It should be noted that concurrently with generation of the pulsed signal of predetermined frequency, that is to say, concurrently with heating, the mould 1 is driven in rotation.

More specifically, the first movable frame 102 and the second movable frame 103 are driven in rotation about the respective axes of rotation, thereby causing the mould 1 to rotate.

During this heating step, the powder initially forms on the surface of the cavity 3 of the mould 1 a porous film to which the rest of the material adheres as it gradually becomes fluid.

A uniform layer is thus formed which becomes solid during the subsequent cooling step.

It should be noted that the heating step is followed by a cooling step.

During the cooling step, a coolant fluid (for example, water) is made to flow through the electrically conductive element 2, cooling the mould 1 and thereby solidifying the layer of thermoplastic material which has adhered to the mould walls.

Preferably, the mould is driven in rotation also during cooling.

The machine thus also comprises a cooling unit 110 configured to cause a coolant fluid (in liquid or gaseous form) to circulate in the coil in such a way as to cool the mould 1.

The cooling unit 110 may comprise a cooling exchanger and a closed circuit in which the coolant fluid can circulate.

The cooling exchanger operates on the coolant fluid before it enters the coil.

Preferably, the mould is cooled concurrently with rotation of the mould 1, that is to say, during rotation of the mould 1.

Also defined is a method of heating a rotational mould for hollow objects of thermoplastic material.

The heating method comprises the following steps:
- providing a rotational mould 1 having at least a first half-shell 1A and a second half-shell 1 B coupled to define a cavity 3 having the shape of the object to be moulded;
- providing at least one electrically conductive element in contact with the outside of at least one of the half-shells (1A, 1B) defining a coil and arranged to generate a magnetic field at least partly surrounding the half-shells (1A, 1 B);
- introducing basic thermoplastic material, in the form of powder, granules or liquid, in the cavity 3;
- electrically powering the coil with a varying high-frequency electric signal so as to heat at least one of the half-shells (1A, 1B) by induction and transmit heat to the basic thermoplastic material inside the cavity 3.

According to another aspect, the step of electrically powering the coil comprises a step of driving the mould 1 in rotation.

According to another aspect, the step of driving the mould 1 in rotation comprises a step of driving the mould 1 simultaneously in rotation about a first axis X1 and a second axis X2 at right angles to each other.

According to yet another aspect, the heating method comprises at least one step of providing on the outside surface of the half-shells (1A,1B) at least one channel 7 for housing the coil.

According to another aspect, the heating method comprises, before the step of electrically powering the coil with a varying high-frequency electric signal, a step of insulating the coil with a dielectric layer 5 wrapped around the outside of the coil itself.

It should be noted that according to a yet further aspect, the electrically conductive element 2 internally defines a passage for a coolant fluid and the method comprises, after the step of electrically powering the coil 2 with a varying high-frequency electric signal, a step of making a coolant fluid circulate in the electrically conductive element 2 in order to reduce the temperature of the half-shells (1A,1 B).

Also defined is a method for moulding hollow thermoplastic objects from thermoplastic material in the form of powder, granules or liquid.

The moulding method according to the invention comprises the following steps:
- providing a mould 1 having a first half-shell 1A and a second half-shell 1 B coupled to define a cavity 3 having the shape of the object to be moulded;
- placing at least one coil made of electrically conductive material in contact with the outside of at least one of the half-shells 1A, 1B;
- introducing basic thermoplastic material, in powder or liquid form, in the cavity 3;
- electrically powering the coil with a varying high-frequency electric signal (preferably at a predetermined frequency) so as to heat at least one of the half-shells (1A, 1B) by induction and transmit heat to the basic thermoplastic material inside the cavity;
- driving the mould 1.

Preferably, the signal which powers the coil is a varying electrical signal whose amplitude is approximately 600 V.

Preferably, simultaneously with heating, the method comprises a step of driving the mould 1 in rotation simultaneously about a first axis X1 and a second axis X2 at right angles to each other.

It should be noted that the moulding method is a rotational moulding method.

It should be noted that the mould 1 and the machine 100 allow making hollow objects (containers of any kind) of any shape: in effect, it is sufficient for the cavity 3 to be shaped to fit the outer contours of the object to be made.

Advantageously, the mould 1 and the machine 100 allow hollow objects to be made extremely rapidly: indeed, induction heating is extremely rapid and allows reduced energy consumption.

Moreover, use of a hollow element 2 allows the mould to be heated and cooled by a single element: that translates as savings in costs and as constructional simplicity of the machine 100 as a whole.

## Claims

1. A rotational moulding machine for moulding hollow objects from basic thermoplastic material in the form of powder, granules or liquid, comprising:
- a mould (1) having at least a first and a second half-shell (1 A, 1 B) of metallic material, coupled to define a cavity (3) having the shape of the hollow object to be moulded, and at least one electrically conductive element (2) disposed at the first half-shell (1A) and/or the second half-shell (1 B) to define a coil;
- a frame (101) and at least one actuator (102,103) for rotating the mould (1) with respect to the frame (101), an electrical power supply (106), electrically coupled to said at least one electrically conductive element (2) to feed it with a variable voltage, so as to generate a varying magnetic field inside the half-shells (1A, 1B), thus heating the mould by electromagnetic induction,
**characterized in that** said variable voltage is at high frequency, the electrically conductive element (2) is in contact with the first half-shell (1A) and/or the second half-shell (1B), and **in that** the power supply (106) comprises a high-frequency electric pulse generator (106) configured to receive a phase signal picked up at ends of the electrically conductive element (2) and configured to regulate in real time the phase of the pulses generated, to compensate possible phase displacements of the pulses between the power supply (106) and the electrically conductive element (2).

2. The machine according to claim 1, wherein the electrical power supply (106) comprises a capacitor pack (113) electrically connected to the electrically conductive element (2) to define a resonant circuit in conjunction with the electrically conductive element (2).

3. The machine according to claim 2, wherein the capacitor pack (113) is integral with the mould (1) and the electric pulse generator (106) is integral with the frame (101).

4. The machine according to claim 2 or 3, comprising a power supply line (112) having a first end and a second end, the power supply (106) being connected to the first end of the line (112) and the electrically conductive element (2) and the capacitor pack (113) being connected in parallel to the second end.

5. The machine according to any of the preceding claims, wherein electrical connections (112) between the power supply (106) and the electrically conductive element (2) comprise bundles of intertwined cables to define a low-inductance line.

6. The machine according to any of the preceding claims, wherein the electrically conductive element (2) is housed in a groove formed on the outside surface of the mould half-shells, at a predetermined depth.

7. The machine according to any of the preceding claims, wherein the at least one actuator comprises:
- at least a first movable frame (102) which movably mounts the mould (1) which is in turn movably supported by the frame (101);
- movement means (104) for moving the first movable frame (102) and configured to move the first movable frame (102) relative to the frame (101);
- a second movable frame (103) movably supported relative to the first movable frame (102) and to which the mould (1) is fixed;
- movement means (105) for moving the second movable frame (103) and configured to move the second movable frame (103) relative to the first movable frame (102).

8. The machine according to any of the preceding claims, wherein the electrically conductive element (2) is internally hollow so as to define a passage for a coolant fluid and comprising a coolant fluid source connected to the electrically conductive element (2) to cause the coolant fluid to circulate inside the electrically conductive element (2).

9. The machine according to claim 8, comprising a control unit configured to cause the coolant fluid to circulate inside the electrically conductive element (2) after the mould (1) has been heated.

10. A method of rotational moulding of hollow objects from basic thermoplastic material in the form of powder, granules or liquid, comprising the following steps:
- providing a mould (1) having at least a first half-shell (1 A) and a second half-shell (1 B) coupled to define a cavity (3) having the shape of the object to be moulded, and at least one electrically conductive element (2) defining a coil and arranged at the first and/or second half-shell (1A, 1B) to generate a magnetic field through said half-shells (1 A, 1 B);
- introducing said thermoplastic material, in powder or liquid form, in said cavity (3);
- heating and rotating the mould (1);
- powering said coil through a power supply (106) with a variable electric signal, so as to heat the mould by electromagnetic induction,
**characterized in that**: the electrically conductive element (2) is in contact with the first half-shell (1A) and/or the second half-shell (1B): said variable electric signal is at high frequency and is in the form of pulses; and **in that** the method comprises the following steps:
- picking up a phase signal at ends of the electrically conductive element (2);
- receiving at the power supply (106) said phase signal;
- regulating in real time the phase of the generated pulses, to compensate possible phase displacements of the pulses between the power supply (106) and the electrically conductive element (2).

11. The method according to claim 10, wherein the step of powering said coil with a variable electric signal at high frequency is performed by a resonant circuit comprising a capacitor pack which is integral with the rotational mould.

12. The method according to claim 10 or 11, comprising a step of cooling the mould by causing a coolant fluid to circulate inside a passage inside the coil.

13. The method according to claim 12, wherein the step of cooling the mould starts after the step of heating the mould itself by electromagnetic induction.

## Patentansprüche

1. Maschine zum Drehformen von Hohlkörpern aus thermoplastischem Basismaterial in Form von Pulver, Granulat oder Flüssigkeit, umfassend:
- eine Form (1), aufweisend mindestens eine erste und eine zweite Halbschale (1A, 1B) aus Metallmaterial, die gekoppelt werden, um einen Hohlraum (3) zu definieren, der die Form des zu formenden Hohlkörpers aufweist, und mindestens ein elektrisch leitendes Element (2), das an der ersten Halbschale (1A) und/oder der zweiten Halbschale (1B) angeordnet ist, um eine Spule zu definieren;
- einen Rahmen (101) und mindestens einen Aktuator (102, 103) zum Drehen der Form (1) zum Rahmen (101),
- eine Stromversorgung (106), die mit dem mindestens einen elektrisch leitenden Element (2) elektrisch gekoppelt ist, um dieses mit einer variablen Spannung zu speisen, sodass ein variierendes Magnetfeld in den Halbschalen (1A, 1B) erzeugt und die Form durch elektromagnetische Induktion erhitzt wird,
**dadurch gekennzeichnet, dass** die variable Spannung eine hochfrequente Spannung ist, dass das elektrisch leitende Element (2) in Kontakt mit der ersten Halbschale (1A) und/oder der zweiten Halbschale (1B) ist, und dass die Stromversorgung (106) einen hochfrequenten elektrischen Impulsgenerator (106) umfasst, der ausgelegt ist, um ein Phasensignal zu empfangen, das an Enden des elektrisch leitenden Elements (2) erfasst wurde, und der ausgelegt ist, um in Echtzeit die Phase der erzeugten Impulse zu regeln, um mögliche Phasenverschiebungen der Impulse zwischen der Stromversorgung (106) und dem elektrisch leitenden Element (2) auszugleichen.

2. Maschine nach Anspruch 1, wobei die Stromversorgung (106) eine Kondensatorbatterie (113) umfasst, die elektrisch mit dem elektrisch leitenden Element (2) verbunden ist, um einen Resonanzkreis in Verbindung mit dem elektrisch leitenden Element (2) zu definieren.

3. Maschine nach Anspruch 2, wobei die Kondensatorbatterie (113) fest mit der Form (1) verbunden ist und der elektrische Impulsgenerator (106) fest mit dem Rahmen (101) verbunden ist.

4. Maschine nach Anspruch 2 oder 3, umfassend eine Stromversorgungsleitung (112), die ein erstes Ende und ein zweites Ende aufweist, wobei die Stromversorgung (106) an das erste Ende der Leitung (112) angeschlossen ist, und das elektrisch leitende Element (2) und die Kondensatorbatterie (113) parallel an das zweite Ende angeschlossen sind.

5. Maschine nach einem der vorhergehenden Ansprüche, wobei elektrische Anschlüsse (112) zwischen der Stromversorgung (106) und dem elektrisch leitenden Element (2) Bündel von verflochtenen Drähten umfassen, um eine Leitung mit niedriger Induktivität zu definieren.

6. Maschine nach einem der vorhergehenden Ansprüche, wobei das elektrisch leitende Element (2) in einer Nut untergebracht ist, die auf der äußeren Oberfläche der Formhalbschalen in einer vorgegebenen Tiefe geformt ist.

7. Maschine nach einem der vorhergehenden Ansprüche, wobei der mindestens eine Aktuator umfasst:
- mindestens einen ersten bewegbaren Rahmen (102), auf dem beweglich die Form (1) montiert ist, die wiederum beweglich vom Rahmen (101) getragen wird;
- Bewegungsmittel (104) zum Bewegen des ersten bewegbaren Rahmens (102) und die ausgelegt sind, um den ersten bewegbaren Rahmen (102) relativ zum Rahmen (101) zu bewegen;
- einen zweiten bewegbaren Rahmen (103), der beweglich relativ zum ersten bewegbaren Rahmen (102) getragen wird und an dem die Form (1) fixiert ist;
- Bewegungsmittel (105) zum Bewegen des zweiten bewegbaren Rahmens (103) und die ausgelegt sind, um den zweiten bewegbaren Rahmen (103) relativ zum ersten bewegbaren Rahmen (102) zu bewegen.

8. Maschine nach einem der vorhergehenden Ansprüche, wobei das elektrisch leitende Element (2) innenseitig hohl ist, sodass es ein Durchgang für ein Kühlfluid definiert, und eine Kühlfluidquelle umfasst, die an das elektrisch leitende Element (2) angeschlossen ist, um zu bewirken, dass das Kühlfluid im elektrisch leitenden Element (2) zirkuliert.

9. Maschine nach Anspruch 8, umfassend eine Steuereinheit, die ausgelegt ist, um zu bewirken, dass das Kühlfluid im elektrisch leitenden Element (2) zirkuliert, nachdem die Form (1) erhitzt wurde.

10. Verfahren zum Drehformen von Hohlkörpern aus thermoplastischem Basismaterial in Form von Pulver, Granulat oder Flüssigkeit, umfassend die folgenden Schritte:
- Bereitstellen einer Form (1), aufweisend mindestens eine erste Halbschale (1A) und eine zweite Halbschale (1B), die gekoppelt werden, um einen Hohlraum (3) zu definieren, der die Form des zu formenden Hohlkörpers aufweist, und mindestens ein elektrisch leitendes Element (2), das eine Spule definiert und an der ersten und/oder der zweiten Halbschale (1A, 1B) angeordnet ist, um ein Magnetfeld durch die Halbschalen (1A, 1B) zu erzeugen;
- Einführen des thermoplastischen Materials in Pulver- oder flüssiger Form in diesen Hohlraum (3);
- Erhitzen und Drehen der Form (1);
- Versorgen der Spule über eine Stromversorgung (106) mit einem variablen elektrischen Signal, sodass die Form durch elektromagnetische Induktion erhitzt wird, **dadurch gekennzeichnet, dass** das elektrisch leitende Element (2) in Kontakt mit der ersten Halbschale (1A) und/oder der zweiten Halbschale (1B) ist;
dass das variable elektrische Signal eine hohe Frequenz und die Form von Impulsen aufweist;
und dadurch, dass das Verfahren die folgenden Schritte umfasst:
- Erfassen eines Phasensignals an Enden des elektrisch leitenden Elements (2);
- Empfangen des Phasensignals an der Stromversorgung (106) ;
- Regeln der Phase der erzeugten Impulse in Echtzeit, um mögliche Phasenverschiebungen der Impulse zwischen der Stromversorgung (106) und dem elektrisch leitenden Element (2) auszugleichen.

11. Verfahren nach Anspruch 10, wobei der Schritt des Versorgens der Spule mit einem variablen elektrischen Signal bei hoher Frequenz von einem Resonanzkreis durchgeführt wird, der eine Kondensatorbatterie, die fest mit der Drehform verbunden ist, umfasst.

12. Verfahren nach Anspruch 10 oder 11, umfassend einen Schritt des Kühlens der Form, indem bewirkt wird, dass ein Kühlfluid in einem Durchgang in der Spule zirkuliert.

13. Verfahren nach Anspruch 12, wobei der Schritt des Kühlens der Form nach dem Schritt des Erhitzens der Form durch elektromagnetische Induktion startet.

## Revendications

1. Machine de moulage rotatif destinée à mouler des objets creux en matière thermoplastique sous forme de poudre, de granulés ou liquide, comprenant :
- un moule (1) ayant au moins une première et une deuxième demi-coque (1A, 1B) en matériau métallique, accouplées pour définir une cavité (3) ayant la forme de l'objet creux à mouler, et au moins un élément électriquement conducteur (2) placé au niveau de la première demi-coque (1A) et/ou de la deuxième demi-coque (1B) pour définir une bobine ;
- un châssis (101) et au moins un actionneur (102, 103) destiné à faire tourner le moule (1) par rapport au châssis (101),
- une source d'alimentation électrique (106), électriquement accouplée au dit au moins un élément électriquement conducteur (2) pour l'alimenter avec une tension variable, de manière à générer un champ magnétique variable à l'intérieur des demi-coques (1A, 1B), provoquant ainsi le chauffage du moule par induction électromagnétique,
**caractérisée en ce que** ladite tension variable est à haute fréquence, l'élément électriquement conducteur (2) est en contact avec la première demi-coque (1A) et/ou la deuxième demi-coque (1B), et **en ce que** la source d'alimentation (106) comprend un générateur à impulsions électriques à haute fréquence (106) configuré pour recevoir un signal de phase prélevé aux bornes de l'élément électriquement conducteur (2) et configuré pour réguler en temps réel la phase des impulsions générées, pour compenser d'éventuels déphasages des impulsions entre la source d'alimentation (106) et l'élément électriquement conducteur (2).

2. Machine selon la revendication 1, dans laquelle la source d'alimentation électrique (106) comprend un bloc de condensateurs (113) électriquement relié à l'élément électriquement conducteur (2) pour définir un circuit résonnant conjointement avec l'élément électriquement conducteur (2).

3. Machine selon la revendication 2, dans laquelle le bloc de condensateurs (113) est solidaire du moule (1) et le générateur d'impulsions électriques (106) est solidaire du châssis (101).

4. Machine selon les revendications 2 ou 3, comprenant une ligne de source d'alimentation (112) ayant une première extrémité et une deuxième extrémité, la source d'alimentation (106) étant raccordée à la première extrémité de la ligne (112) et l'élément électriquement conducteur (2) et le bloc de condensateurs (113) étant raccordés en parallèle à la deuxième extrémité.

5. Machine selon l'une quelconque des revendications précédentes, dans laquelle les connexions électriques (112) entre la source d'alimentation (106) et l'élément électriquement conducteur (2) comprennent des lots de câbles entrelacés pour définir une ligne à faible inductance.

6. Machine selon l'une quelconque des revendications précédentes, dans laquelle l'élément électriquement conducteur (2) est logé dans une rainure formée sur la surface extérieure des demi-coques du moule, à une profondeur prédéterminée.

7. Machine selon l'une quelconque des revendications précédentes, dans laquelle l'au moins un actionneur comprend :
- au moins un premier châssis mobile (102) qui supporte de façon mobile le moule (1) qui est à son tour supporté de façon mobile par le châssis (101) ;
- des moyens de déplacement (104) destinés à déplacer le premier châssis mobile (102) et configurés pour déplacer le premier châssis mobile (102) par rapport au châssis (101) ;
- un deuxième châssis mobile (103) supporté de façon mobile par rapport au premier châssis mobile (102) et auquel le moule (1) est fixé ;
- des moyens de déplacement (105) destinés à déplacer le deuxième châssis mobile (103) et configurés pour déplacer le deuxième châssis mobile (103) par rapport au premier châssis mobile (102).

8. Machine selon l'une quelconque des revendications précédentes, dans laquelle l'élément électriquement conducteur (2) est creux à l'intérieur de manière à définir un conduit pour un liquide réfrigérant et comprenant une source de liquide réfrigérant reliée à l'élément électriquement conducteur (2) pour faire en sorte que le liquide réfrigérant circule à l'intérieur de l'élément électriquement conducteur (2).

9. Machine selon la revendication 8, comprenant une unité de commande configurée pour faire en sorte que le liquide réfrigérant circule à l'intérieur de l'élément électriquement conducteur (2) après que le moule (1) ait été chauffé.

10. Procédé de moulage rotatif d'objets creux en matière thermoplastique de base sous forme de poudre, de granulés ou liquide, comprenant les étapes suivantes :
- prévoir un moule (1) ayant au moins une première demi-coque (1A) et une deuxième demi-coque (1B) accouplées pour définir une cavité (3) ayant la forme de l'objet à mouler, et au moins un élément électriquement conducteur (2) définissant une bobine et placé au niveau de la première et/ou de la deuxième demi-coque (1A, 1B) pour générer un champ magnétique à travers lesdites demi-coques (1A, 1B) ;
- introduire ladite matière thermoplastique, sous forme de poudre ou liquide, dans ladite cavité (3) ;
- chauffer et faire tourner le moule (1) ;
- alimenter ladite bobine par l'intermédiaire d'une source d'alimentation (106) avec un signal électrique variable, de manière à chauffer le moule par induction électromagnétique,
**caractérisé en ce que** l'élément électriquement conducteur (2) est en contact avec la première demi-coque (1A) et/ou la deuxième demi-coque (1B) ;
ledit signal électrique variable est à haute fréquence et est sous forme d'impulsions ;
et **en ce que** le procédé comprend les étapes suivantes :
- prélever un signal de phase aux bornes de l'élément électriquement conducteur (2) ;
- recevoir au niveau de la source d'alimentation (106) ledit signal de phase ;
- réguler en temps réel la phase des impulsions générées, pour compenser des éventuels déphasages des impulsions entre la source d'alimentation (106) et l'élément électriquement conducteur (2).

11. Procédé selon la revendication 10, dans lequel l'étape consistant à alimenter ladite bobine par un signal électrique variable à haute fréquence est effectuée par un circuit résonnant comprenant un bloc de condensateurs étant solidaire du moule en rotation.

12. Procédé selon les revendications 10 ou 11, comprenant une étape consistant à refroidir le moule en faisant en sorte qu'un liquide réfrigérant circule à l'intérieur d'un conduit situé à l'intérieur de la bobine.

13. Procédé selon la revendication 12, dans lequel l'étape consistant à refroidir le moule débute après l'arrêt du chauffage du moule lui-même par induction électromagnétique.
